# EUROPÄISCHE PATENTSCHRIFT

(11) **EP 2 761 735 B1**
(45) Veröffentlichungstag und Bekanntmachung des Hinweises auf die Patenterteilung: **16.10.2019**
(21) Anmeldenummer: 12745675.4
(22) Anmeldetag: 02.08.2012
(51) Int. Cl.: H02M 1/36, H02M 3/335, H02M 3/337, H02M 1/00

(54) **ANSTEUERVORRICHTUNG UND VERFAHREN ZUM ANSTEUERN EINES GLEICHSPANNUNGSWANDLERS**
ACTIVATION APPARATUS AND METHOD FOR ACTIVATING A DIRECT VOLTAGE CONVERTER
DISPOSITIF DE COMMANDE ET PROCÉDÉ DE COMMANDE D'UN CONVERTISSEUR DE TENSION CONTINUE

(30) Priorität: 29.09.2011 DE 102011083763
(43) Veröffentlichungstag der Anmeldung: 06.08.2014
(73) Patentinhaber: Robert Bosch GmbH, 70442 Stuttgart (DE)
(72) Erfinder: KOCH, Stefan, 77876 Kappelrodeck (DE); LIEBLANG, Florian, 77815 Buehl (DE); BINHACK, Stephan, 76199 Karlsruhe (DE); PRISTL, Tobias, 76185 Karlsruhe (DE); ZELLER, Michael, 77815 Buehl-Balzhofen (DE); HUECKEL, Eric, 79312 Emmendingen (DE); MUELLER, Stephan, 77815 Buehl (DE); TIAN, Jian, 77815 Buehl (DE); BOCHAT, Ralf, 77830 Buehlertal (DE); BERGMANN, Ralf-Peter, 77880 Sasbach (DE)
(86) Internationale Anmeldenummer: PCT/EP2012/065148
(87) Internationale Veröffentlichungsnummer: WO 2013/045141

(56) Entgegenhaltungen:
- CN-B- 101 170 278
- US-A1- 2007 236 192
- US-A1- 2008 211 465

## Beschreibung

Die Erfindung betrifft eine Ansteuervorrichtung und ein Verfahren zum Ansteuern für einen Gleichspannungswandler, insbesondere für einen Gegentaktflusswandler in Vollbrückenschaltung.

### Stand der Technik

Zur Gleichspannungswandlung, beispielsweise zur Versorgung eines Niedervoltbordnetzes eines Fahrzeugs, werden üblicherweise Synchrongleichrichterschaltungen bei Gegentaktflusswandlern in Voll- oder Halbbrückenschaltung eingesetzt. Die hierzu sowohl primär- als auch sekundärseitig verwendeten Leistungshalbleiterschalter, beispielsweise MOSFETs, müssen gegen Überspannung bzw. zu hohe Stromstärken geschützt werden.

Zur Ansteuerung aktiver Synchrongleichrichterschaltungen werden hierzu von einem Mikroprozessor Pulsbreitensignale bereitgestellt, welche beispielsweise durch ein Pulsweitenmodulationsglied in entsprechende PWM-Ansteuersignale für die einzelnen Halbleiterschalter umgesetzt werden. Bei einem Abschalten eines Gegentaktflusswandlers kann es aufgrund des Abfalls der primärseitigen Versorgungsspannung zu einem sekundärseitigem lückenden Strombetrieb (DCM, "discontinuous current mode") kommen, der die sekundärseitigen Halbleiterschalter beschädigen kann. Gleichzeitig ist es möglich, dass die magnetische Flussreserve in der Generierung der PWM-Ansteuersignale schwindet und ein zu hoher Magnetisierungsstrom zu einer Sättigung der Primärseite des Transformators des Gegentaktflusswandlers und einer daraus resultierenden Verringerung der magnetischen Induktivität führt, was wiederum ein Gefährdungspotential für die primärseitigen Halbleiterschalter durch hohe primärseitige Ströme darstellen kann.

Die Druckschrift US 7,561,450 B2 offenbart eine Schutzschaltung für einen galvanisch entkoppelten Gleichspannungswandler, mit der hohe Ströme durch Halbleiterschalter des Gleichspannungswandlers vermieden werden können, wenn ein Lastbedarf auf der Sekundärseite des Gleichspannungswandlers eine kritische Schwelle überschreitet. Dazu wird der Energietransfer von der Primär- auf die Sekundärseite für eine vorbestimmte Zeitspanne begrenzt, nach der die Schutzschaltung den Gleichspannungswandler sicher abschalten kann.

US 2007/0236192 A1 offenbart einen adaptiven Gleichspannungswandler. Die Ausgangsspannung dieses Gleichspannungswandlers kann durch eine Modulationseinheit eingestellt werden, wobei die Modulationseinheit Pulssignale ausgibt, deren Pulsbreite, Amplitude und Flankensteilheit angepasst werden kann. Über eine Feedback-Kontroll-Einheit wird die ausgegebene Spannung mit einer Referenzspannung verglichen und das Ergebnis dieses Vergleichs an die Modulationseinheit zurückgemeldet. Ein Referenzwert (für Spannung oder Strom) wird dabei für eine vorbestimmte Zeitspanne verringert.

CN 101170278 B betrifft einen Synchrongleichrichter mit sanfter Abschaltfunktion. Während des Abschaltvorgangs wird dabei ein auf eine Referenzspannung aufgeladener Kondensator über einen Widerstand und ein Schaltelement entladen.

### Offenbarung der Erfindung

Die vorliegende Erfindung schafft gemäß einem Aspekt eine Ansteuervorrichtung für einen galvanisch entkoppelten Gleichspannungswandler mit den Merkmalen des unabhängigen Patentanspruchs 1.

Die vorliegende Erfindung schafft gemäß einem weiteren Aspekt ein System, mit einem Gegentaktflusswandler, welcher einen primärseitigen Vierquadrantensteller, einen Transformator, einen Synchrongleichrichter und ein LC-Filter umfasst, und einer erfindungsgemäßen Ansteuervorrichtung, welche dazu ausgelegt ist, pulsweitenmodulierte Ansteuersignale für Halbleiterschalter des Vierquadrantenstellers und des Synchrongleichrichters zu erzeugen.

Die vorliegende Erfindung schafft gemäß einem weiteren Aspekt ein Verfahren zum Ansteuern eines galvanisch entkoppelten Gleichspannungswandlers mit den Merkmalen des unabhängigen Patentanspruchs 9.

### Vorteile der Erfindung

Eine Idee der vorliegenden Erfindung ist es, primär- und/oder sekundärseitige Schalteinrichtungen eines galvanisch entkoppelten Gleichspannungswandlers derart anzusteuern, dass bereits durch die Pulsbreitenmodulation der Ansteuersignale kritische Betriebszustände des Gleichspannungswandlers vermieden werden. Dabei soll insbesondere bei einem Ausschalten des Gleichspannungswandlers der Übergang von einem nicht-lückenden Strombetrieb (DCM) in einen lückenden Strombetrieb (CCM, "continuous current mode") vermieden werden, indem vor einem Ausschalten des Gleichspannungswandlers der Ausgangsstrom des Synchrongleichrichters des Gleichspannungswandlers sukzessive gedrosselt wird. Auf diese Weise kann das Auftreten von rücklaufenden Strömen der sekundärseitigen Speicherdrossel durch die sekundärseitigen Schalteinrichtungen bei einer Verringerung der primärseitigen Versorgungsspannung des Gleichspannungswandlers verhindert werden.

Eine weitere Idee der vorliegenden Erfindung ist es, gleichzeitig die Ausgangsspannung des Synchrongleichrichters sukzessive zu drosseln, so dass der Tastgrad der Pulsbreitenmodulation bei einer Verringerung primärseitigen Versorgungsspannung nicht maximal wird und somit die magnetische Flussreserve nicht vollständig aufgebraucht wird, was ansonsten zu einer Sättigung des Transformators führen könnte.

Ein wesentlicher Vorteil der Erfindung ist es, dass auf zusätzliche Einrichtungen zur primärseitigen Unterspannungserfassung bzw. sekundärseitigen Unterstromerfassung verzichtet werden kann. Gleichzeitig werden die Betriebssicherheit und die Effizienz des Gleichspannungswandlers nicht beeinträchtigt, da Rückflussströme durch die Speicherdrossel und Sättigungseffekte des Transformators durch die erfindungsgemäße Ansteuerstrategie vermieden werden können.

In einer vorteilhaften Ausführungsform kann der galvanisch entkoppelte Gleichspannungswandler ein bidirektionaler Gegentaktflusswandler mit primärseitiger Vollbrückenschaltung sein. Derartige Gleichspannungswandler können insbesondere für Hochleistungsanwendungen in elektrisch betriebenen Fahrzeugen oder Hybridfahrzeugen vorteilhaft eingesetzt werden.

In einer vorteilhaften Ausführungsform kann die Signalerzeugungseinrichtung weiterhin dazu ausgelegt sein, ein Ausschaltsignal für den Gleichspannungswandler zu empfangen. Damit kann vorteilhafterweise ein kontrolliertes Ausschalten des Gleichspannungswandlers unter Verringerung des Referenzstromsignals nach dem Empfang des Ausschaltsignals auf den vorbestimmten Referenzstromschwellwert erfolgen. Dies bietet den Vorteil, dass kein sekundärseitiger lückender Strombetrieb bei einem Abfall der primärseitigen Versorgungsspannung auftritt, und damit keine störenden Rücklaufströme durch die Speicherdrossel oder die sekundärseitigen Schalteinrichtungen des Synchrongleichrichters auftreten können.

In einer vorteilhaften Ausführungsform kann die Signalerzeugungseinrichtung weiterhin dazu ausgelegt sein, ein Referenzspannungssignal zu erzeugen, und das Referenzspannungssignal innerhalb einer zweiten vorbestimmten Zeitspanne auf einen vorbestimmten Referenzspannungsschwellwert zu verringern, wobei die Ansteuervorrichtung weiterhin eine zweite Vergleichereinrichtung umfasst, welche mit der Signalerzeugungseinrichtung gekoppelt ist, und welche dazu ausgelegt ist, die sekundärseitige Ausgangsspannung des Synchrongleichrichters zu erfassen, mit dem Referenzspannungssignal zu vergleichen und in Abhängigkeit von dem Vergleich ein Spannungssteuersignal zu erzeugen, und wobei die Pulsbreitenmodulationseinrichtung weiterhin dazu ausgelegt ist, pulsbreitenmodulierte Ansteuersignale für die primärseitigen Schalteinrichtungen des Gleichspannungswandlers auf der Basis des Spannungssteuersignals zu erzeugen. Dadurch wird in vorteilhafter Weise eine Sättigung des Transformators vermieden, da der Tastgrad der Pulsbreitenmodulation auch bei einem Ausschaltvorgang des Gleichspannungswandlers nicht an die maximale Obergrenze stößt.

In diesem Fall kann die Signalerzeugungseinrichtung weiterhin dazu ausgelegt sein, das Referenzspannungssignal nach dem Empfang des Ausschaltsignals auf den vorbestimmten Referenzspannungsschwellwert zu verringern. Damit kann die Spannung auf einem Eingangskondensator des Gleichspannungswandlers vor einem Ausschalten des Gleichspannungswandlers effektiv abgebaut werden, ohne dass ein zusätzlicher Entladeschaltkreis notwendig wäre.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines galvanisch entkoppelten Gleichspannungswandlers gemäß einer Ausführungsform der Erfindung;
- Fig. 2: eine schematische Darstellung einer Ansteuervorrichtung für einen galvanisch entkoppelten Gleichspannungswandler gemäß einer weiteren Ausführungsform der Erfindung;
- Fig. 3: eine schematische Darstellung eines Verfahrens zum Ansteuern eines galvanisch entkoppelten Gleichspannungswandlers mit Synchrongleichrichter gemäß einer weiteren Ausführungsform der Erfindung; und
- Fig. 4: eine schematische Darstellung eines Systems mit einem galvanisch entkoppelten Gleichspannungswandler und einer zugehörigen Ansteuervorrichtung gemäß einer weiteren Ausführungsform der Erfindung.

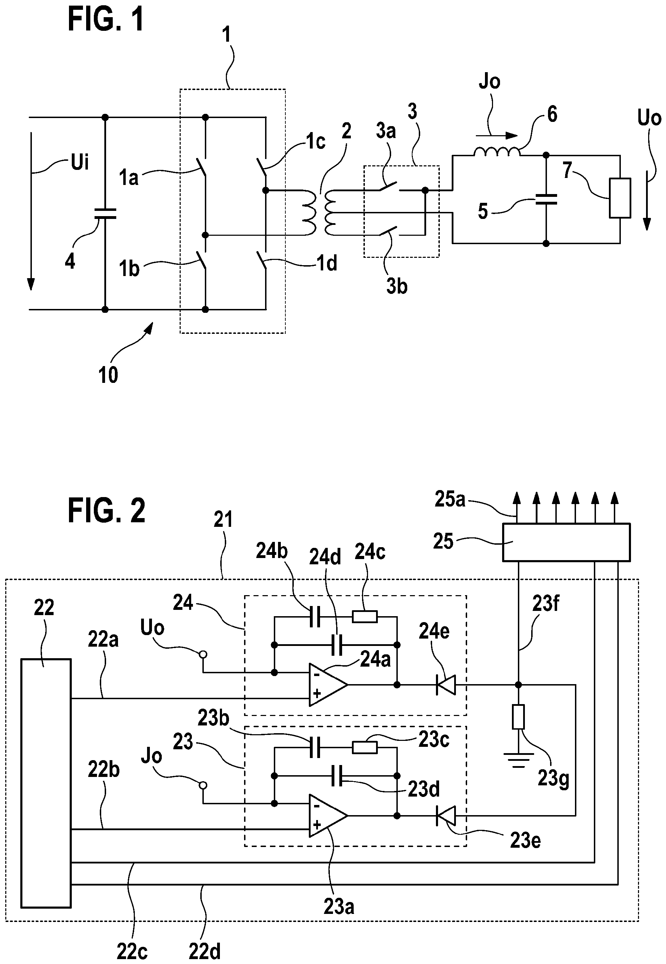

Fig. 1 zeigt eine schematische Darstellung eines Gleichspannungswandlers 10. Der Gleichspannungswandler 10 umfasst einen Transformator 2 mit einer primärseitigen Wicklung und einer sekundärseitigen Wicklung, welche über einen Mittelabgriff in zwei Abschnitte geteilt ist. Der Transformator 2 kann beispielsweise zur Wandlung einer Hochvoltspannung in eine Niedervoltspannung ausgelegt sein und zum Beispiel ein Wicklungsverhältnis zwischen primärseitiger und sekundärseitiger Wicklung von über Eins aufweisen, insbesondere beispielsweise 10:1. Das Wicklungsverhältnis der beiden sekundärseitigen Wicklungsabschnitte kann dabei insbesondere Eins betragen, das heißt, die beiden sekundärseitigen Wicklungsabschnitte besitzen gleiche Wicklungszahl.

Die primärseitige Wicklung des Transformators kann dabei von zwei Ausgangsanschlüssen eines Vierquadrantenstellers 1 gespeist werden. Der Vierquadrantensteller 1 kann dabei beispielsweise vier Schalteinrichtungen 1a, 1b, 1c, 1d in Vollbrückenschaltung aufweisen. Die Schalteinrichtungen 1a, 1b, 1c, 1d können dabei beispielsweise Leistungshalbleiterschalter aufweisen, wie zum Beispiel Feldeffekttransistoren (FETs). Beispielsweise können die Halbleiterschalter jeweils als selbstsperrende n-MOSFETs (n-leitende Metal Oxide Semiconductor Field-Effect Transistors, Anreicherungstyp), IGBTs (Insulated Gate Bipolar Transistors), JFETs (Junction Field-Effect Transistors) oder p-MOSFETs (p-leitende Metal Oxide Semiconductor Field-Effect Transistors) umfassen.

Der Vierquadrantensteller 1 kann beispielsweise über einen Zwischenkreiskondensator 4 mit einer Versorgungsspannung Ui beaufschlagt werden, beispielsweise durch eine Traktionsbatterie eines Hochvoltnetzes eines elektrisch betriebenen Fahrzeugs oder eines Hybridfahrzeugs. Die Versorgungsspannung Ui kann dabei eine in der Amplitude variierende Gleichspannung sein, so dass die Schalteinrichtungen 1a, 1b, 1c, 1d des Vierquadrantenstellers 1 derart angesteuert werden können, dass die Versorgungsspannung Ui in eine wechselseitig an die Eingangsanschlüsse der primärseitigen Wicklung des Transformators 2 angelegte Wechselspannung umgerichtet wird.

Sekundärseitig sind die beiden endseitigen Abgriffe der jeweiligen sekundärseitigen Wicklungsabschnitte mit zwei Eingängen einer Synchrongleichrichterschaltung 3 verbunden. Die Synchrongleichrichterschaltung 3 umfasst dabei zwei Schalteinrichtungen 3a, 3b. Die Schalteinrichtungen 3a, 3b können dabei beispielsweise Leistungshalbleiterschalter aufweisen, wie zum Beispiel FETs. Beispielsweise können die Halbleiterschalter jeweils als selbstsperrende n-MOSFETs, IGBTs, JFETs oder p-MOSFETs umfassen. Der Mittelabgriff der sekundärseitigen Wicklung des Transformators kann dabei durch die Synchrongleichrichterschaltung 3 durchgeführt sein, so dass zwischen dem Mittelabgriff und einem der jeweiligen endseitigen Abgriffe des Transformators an den Ausgangsanschlüssen der Synchrongleichrichterschaltung 3 eine gleichgerichtete und tiefgesetzte Gleichspannung anliegt. Die Gleichspannung kann dabei als Ausgangsspannung Uo des Gleichspannungswandlers 10 über eine sekundärseitige Speicherdrossel 6 geführt und zum Betrieb einer Last 7 eingesetzt werden. Die sekundärseitige Speicherdrossel 6 und ein zwischen die Ausgangsanschlüsse der Synchrongleichrichterschaltung 3 gekoppelter Zwischenkreiskondensator 5 stellen dabei einen ausgangsseitigen LC-Filter dar, welcher die gleichgerichtete Ausgangsspannung der Synchrongleichrichterschaltung 3 glättet.

Die Synchrongleichrichterschaltung 3 ist dazu ausgelegt, von den endseitigen Abgriffen der jeweiligen sekundärseitigen Wicklungsabschnitte eine an dem Transformator 2 sekundärseitig anliegende Spannung abzugreifen und über eine geeignete Ansteuerung der Schalteinrichtungen 3a, 3b in eine Gleichspannung zu wandeln. Mit anderen Worten, ist während des Betriebs des Gleichspannungswandlers 10 zwischen den Ausgangsanschlüssen der Synchrongleichrichterschaltung 3 eine Ausgangsgleichspannung Uo abgreifbar, welche je nach Lastbedarf einen Strom Jo in der Speicherdrossel 6 verursacht.

Die Ansteuerung der primärseitigen Schalteinrichtungen 1a, 1b, 1c und 1d sowie der sekundärseitigen Schalteinrichtungen 3a und 3b erfolgt über pulsbreitenmodulierte Ansteuersignale. Die Pulsbreitenmodulation kann dabei mit einem Tastgrad D erfolgen, der von dem Wicklungsverhältnis des Transformators 2 sowie dem Verhältnis der Versorgungsspannung Ui zur gewünschten Ausgangsspannung Uo abhängig ist. Der Tastgrad D kann derart ausgelegt sein, dass eine magnetische Flussreserve vorhanden ist, das heißt, dass zwischen zwei Schaltvorgängen der Schalteinrichtungen 1a, 1b, 1c, 1d jeweils ein Schutzzeitintervall vorgesehen ist, während dessen der magnetische Fluss in dem Transformator 2 abgebaut werden kann. Sinkt nun die Versorgungsspannung Ui, so ist es notwendig, bei gleich bleibender Ausgangsspannung Uo den Tastgrad D zu erhöhen. Unter diesen Umständen kann es möglich sein, dass der Tastgrad D derart erhöht wird, dass die magnetische Flussreserve abgebaut wird, das heißt, dass keine Zeit für die Entmagnetisierung des Transformators 2 bleibt. Dies ist insbesondere problematisch, da die Schalteinrichtungen 1a, 1b, 1c, 1d fertigungs- und alterungsbedingten Schwankungen unterliegen, und damit der Leistungseintrag in die primärseitige Wicklung des Transformators 2 nicht symmetrisch erfolgen kann. Ohne Entmagnetisierung des Transformators 2 kann sich somit nach etlichen Arbeitszyklen eine Sättigung des Transformators 2 einstellen, was aufgrund der sich infolge dessen rapide verringernden magnetischen Induktivität des Transformators 2 zu starken Strömen in den Schalteinrichtungen 1a, 1b, 1c und 1d führen und diese irreparabel schädigen kann.

Weiterhin wird der Gleichspannungswandler 10 üblicherweise in einem nicht-lückenden Strombetrieb (CCM) betrieben, das heißt, dass der Strom Jo in der Speicherdrossel 6 über einen Arbeitszyklus hinweg nicht unter eine Stromuntergrenze absinkt. Dazu kann zwischen der Synchrongleichrichterschaltung 3 und der Last 7 beispielsweise ein (nicht dargestellter) Shuntwiderstand vorgesehen sein, an dem der Ausgangsstrom der Synchrongleichrichterschaltung 3 gemessen werden kann.

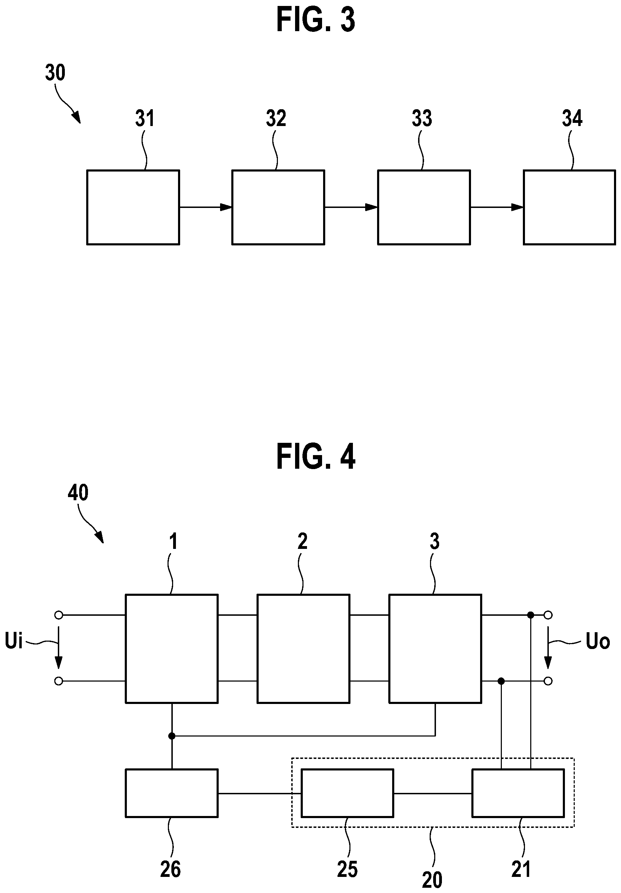

Fig. 4 zeigt eine schematische Darstellung eines Systems 20 mit einem Gleichspannungswandler. Der Gleichspannungswandler kann dabei ähnlich wie in Fig. 1 gezeigt aufgebaut sein, und einen Vierquadrantensteller 1 aufweisen, welcher mit einer Versorgungsspannung Ui versorgt wird. Der Vierquadrantensteller 1 ist mit einem Transformator 2 verbunden, der wiederum mit einer Synchrongleichrichterschaltung 3 gekoppelt ist. An den Ausgangsanschlüssen der Synchrongleichrichterschaltung 3 kann eine Ausgangsgleichspannung Uo abgegriffen werden. Gleichzeitig können an den Ausgangsanschlüssen der Synchrongleichrichterschaltung 3 Betriebsparameter des Gleichspannungswandlers ermittelt werden, beispielsweise die Höhe der Ausgangsspannung Uo oder die Ausgangsstromstärke Jo der Synchrongleichrichterschaltung 3.

Die Betriebsparameter können dabei von einer Steuereinheit 21 erfasst werden. Die Steuereinheit ist dabei in Fig. 2 in größerem Detail gezeigt. Die Steuereinheit 21 ist dabei dazu ausgelegt, die Betriebsparameter zu erfassen und auf deren Basis Ansteuersignale für eine Pulsbreitenmodulationseinrichtung 25 zu erzeugen. Die Pulsbreitenmodulationseinrichtung 25 erzeugt auf der Basis der von der Steuereinheit 21 empfangenen Ansteuersignale pulsbreitenmodulierte Ansteuersignale, die an eine Treibereinrichtung 26 weitergegeben werden, welche die Schalteinrichtungen des Vierquadrantenstellers 1 und der Synchrongleichrichterschaltung 3 treibt.

Fig. 2 zeigt eine schematische Darstellung einer Steuereinheit 21 gemäß Fig. 4 in höherem Detail. Die Steuereinheit 21 weist dabei eine Signalerzeugungseinrichtung 22 auf, welche dazu ausgelegt ist, Steuersignale für Schalteinrichtungen 3a, 3b des Synchrongleichrichters 3 in Fig. 1 zu erzeugen. Die Signalerzeugungseinrichtung 22 kann beispielsweise ein Mikroprozessor, ein Mikrocontroller, ein ASIC, ein FPGA, ein integrierter Schaltkreis oder eine ähnliche Steuereinrichtung sein. Die Signalerzeugungseinrichtung 22 ist dazu ausgelegt, ein Steuersignal 22c zum Abschalten der Schalteinrichtungen 1a, 1b, 1c, 1d des Vierquadrantenstellers 1 und ein Steuersignal 22d zum Abschalten der Schalteinrichtungen 3a, 3b der Synchrongleichrichterschaltung 3 zu erzeugen.

Die Signalerzeugungseinrichtung 22 kann dazu ausgelegt sein, ein Referenzstromsignal 22b und ein Referenzspannungssignal 22a zu erzeugen. Das Referenzstromsignal 22b kann dabei zur Begrenzung des Ausgangsstroms Jo der Synchrongleichrichterschaltung 3 dienen, das heißt, die Ansteuersignale der Steuereinheit 21 für die Schalteinrichtungen 3a, 3b der Synchrongleichrichterschaltung 3 sind derart gestaltet, dass der Ausgangsstrom Jo der Synchrongleichrichterschaltung 3 den Wert des Referenzstromsignals 22b nicht überschreitet. Gleichermaßen kann das Referenzspannungssignal 22b kann dabei zur Begrenzung der Ausgangsspannung Uo der Synchrongleichrichterschaltung 3 dienen, das heißt, die Ansteuersignale der Steuereinheit 21 für die Schalteinrichtungen 1a, 1b, 1c, 1d des Vierquadrantenstellers 1 sind derart gestaltet, dass die Ausgangsspannung Uo der Synchrongleichrichterschaltung 3 den Wert des Referenzspannungssignals 22a nicht überschreitet.

Die Steuereinheit 21 weist weiterhin eine erste Vergleichereinrichtung 23 auf, welche mit der Signalerzeugungseinrichtung 22 gekoppelt ist, und welche dazu ausgelegt ist, den sekundärseitigen Ausgangsstrom Jo des Synchrongleichrichters 3 zu erfassen. Die erste Vergleichereinrichtung 23 ist weiterhin dazu ausgelegt, den sekundärseitigen Ausgangsstrom Jo mit dem Referenzstromsignal 22b zu vergleichen und in Abhängigkeit von dem Vergleich ein Stromsteuersignal zu erzeugen. Die erste Vergleichereinrichtung 23 kann einen Operationsverstärker 23a aufweisen, welcher als Signaleingänge den erfassten Ausgangsstrom Jo am invertierenden Eingang und das Referenzstromsignal 22b am nicht-invertierenden Eingang empfängt. Über einen Rückkoppelpfad mit einer Parallelschaltung aus einem Kondensator 23d und einer Reihenschaltung aus einem Kondensator 23b und einem ohmschen Widerstand 23c kann das Ausgabesignal des Operationsverstärkers 23a in den invertierenden Eingang des Operationsverstärkers 23 zurückgekoppelt werden. Am Ausgangsanschluss der ersten Vergleichereinrichtung 23a kann eine Diode 23e vorgesehen sein. Die erste Vergleichereinrichtung 23a kann über einen ohmschen Widerstand 23g mit einem Massepotential einerseits und mit einer Pulsbreitenmodulationseinrichtung 25 andererseits gekoppelt sein.

Die Steuereinheit 21 weist weiterhin eine zweite Vergleichereinrichtung 24 auf, welche mit der Signalerzeugungseinrichtung 22 gekoppelt ist, und welche dazu ausgelegt ist, die sekundärseitige Ausgangsspannung Uo des Synchrongleichrichters 3 zu erfassen. Die zweite Vergleichereinrichtung 24 ist weiterhin dazu ausgelegt, die sekundärseitige Ausgangsspannung Uo mit dem Referenzspannungssignal 22a zu vergleichen und in Abhängigkeit von dem Vergleich ein Spannungssteuersignal zu erzeugen. Die zweite Vergleichereinrichtung 24 kann einen Operationsverstärker 24a aufweisen, welcher als Signaleingänge die erfassten Ausgangsspannung Uo am invertierenden Eingang und das Referenzspannungssignal 22a am nicht-invertierenden Eingang empfängt. Über einen Rückkoppelpfad mit einer Parallelschaltung aus einem Kondensator 24d und einer Reihenschaltung aus einem Kondensator 24b und einem ohmschen Widerstand 24c kann das Ausgabesignal des Operationsverstärkers 24a in den invertierenden Eingang des Operationsverstärkers 24 zurückgekoppelt werden. Am Ausgangsanschluss der zweiten Vergleichereinrichtung 24 kann eine Diode 24e vorgesehen sein. Die zweite Vergleichereinrichtung 24 kann mit dem Ausgangsanschluss der ersten Vergleichereinrichtung 23 gekoppelt sein und über den ohmschen Widerstand 23g mit einem Massepotential einerseits und mit der Pulsbreitenmodulationseinrichtung 25 andererseits gekoppelt sein. Die erste und zweite Vergleichereinrichtung 23 bzw. 24 geben auf der Signalleitung 23f gemeinsam ein Ausgangssignal an die Pulsbreitenmodulationseinrichtung 25 ab.

Die Pulsbreitenmodulationseinrichtung 25 kann mit der Signalerzeugungseinrichtung 22 und den Vergleichereinrichtungen 23, 24 gekoppelt sein. Die Pulsbreitenmodulationseinrichtung 25 ist dazu ausgelegt, pulsbreitenmodulierte Ansteuersignale 25a für die Schalteinrichtungen des Synchrongleichrichters 3 und/oder des Vierquadrantenstellers 1 auf der Basis der Steuersignale 22c, 22d, des Stromsteuersignals der ersten Vergleichereinrichtung 23 sowie gegebenenfalls des Spannungssteuersignals der zweiten Vergleichereinrichtung 24 zu erzeugen.

Im Bezug auf das in Fig. 3 schematisch dargestellte Verfahren 30 zum Ansteuern eines galvanisch entkoppelten Gleichspannungswandlers mit Synchrongleichrichter, beispielsweise des in Fig. 1 gezeigten Gleichspannungswandlers 1, wird im Folgenden die Funktion der Steuereinheit 21 genauer erläutert.

In einem ersten Schritt 31 kann ein Erzeugen von pulsweitenmodulierten Ansteuersignalen für die Schalteinrichtungen 3a, 3b des Synchrongleichrichters 3 in Abhängigkeit von dem Referenzstromsignal 22b erfolgen. Das Referenzstromsignal 22b begrenzt dabei den Ausgangsstrom Jo des Synchrongleichrichters 3. In Schritt 31 kann weiterhin ein Erzeugen von pulsweitenmodulierten Ansteuersignalen für primärseitige Schalteinrichtungen des Gleichspannungswandlers 10, beispielsweise für die Schalteinrichtungen 1a, 1b, 1c, 1d des Vierquadrantenstellers 1, in Abhängigkeit von dem Referenzspannungssignal 22a erfolgen. Das Referenzspannungssignal 22a besitzt dabei einen Wert, der die Ausgangsspannung Uo des Synchrongleichrichters 3 begrenzt.

Die Signalerzeugungseinrichtung 22 kann in einem Schritt 32 ein Ausschaltsignal für den Gleichspannungswandler 10 empfangen. Daraufhin kann die Signalerzeugungseinrichtung 22 in einem Schritt 33 das Referenzstromsignal 22b innerhalb einer ersten vorbestimmten Zeitspanne, beispielsweise innerhalb von einigen Millisekunden, auf einen vorbestimmten Referenzstromschwellwert verringern. Bei einem Ausschalten des Gleichspannungswandlers 10 kommt es zu einer Verringerung der Versorgungsspannung Ui. Wenn der Ausgangsstrom Jo der Synchrongleichrichterschaltung 3 konstant hoch bleibt, dann reicht der Energieübertrag über den Transformator 2 nicht mehr aus, um den Stromfluss durch die Speicherdrossel 6 während eines Arbeitszyklus aufrechtzuerhalten, das heißt, Stromfluss durch die Speicherdrossel 6 sinkt bis auf Null. Das bedeutet, dass der Gleichspannungswandler 10 dann im lückenden Strombetrieb (DCM) betrieben würde.

Um dies zu vermeiden, wird der Ausgangsstrom Jo der Synchrongleichrichterschaltung 3 mit dem Absinken der Versorgungsspannung Ui verringert, so dass der Gleichspannungswandler 10 während des gesamten Abschaltvorgangs im nicht-lückenden Strombetrieb (CCM) betrieben werden kann. Dies vermeidet Rückflüsse des Stroms durch die Speicherdrossel 6 und damit einhergehende Stromflüsse durch die Schalteinrichtungen 3a, 3b. Der Stromfluss durch die Schalteinrichtungen 3a, 3b erfolgt beispielsweise lediglich durch die intrinsische Diode ("body diode") der Leistungshalbleiterschalter 3a, 3b. Nach dem Verstreichen der ersten vorbestimmten Zeitspanne kann die Signalerzeugungseinrichtung 22 das Steuersignal 22d derart erzeugen, dass die Schalteinrichtungen 3a, 3b komplett abgeschaltet werden.

Wenn an den Ausgangsanschlüssen der Synchrongleichrichterschaltung 3 eine Niedervoltbatterie oder eine andere Gleichspannungsquelle angeschlossen ist, können nach dem Verstreichen der ersten vorbestimmten Zeitspanne auch die Schalteinrichtungen 1a, 1b, 1c, 1d des Vierquadrantenstellers 1 abgeschaltet werden, beispielsweise indem die Signalerzeugungseinrichtung 22 das Steuersignal 22c entsprechend generiert.

Andernfalls kann die Signaleinzeugungseinrichtung 22 in einem Schritt 34 das Referenzspannungssignal 22a innerhalb einer zweiten vorbestimmten Zeitspanne nach dem Empfangen des Ausschaltsignals auf einen vorbestimmten Referenzspannungsschwellwert verringern. Dadurch kann das Verhältnis zwischen der während des Ausschaltvorgangs geringer werdenden Versorgungsspannung Ui und der durch das Referenzspannungssignal 22a geringer werdenden Ausgangsspannung Uo gleich oder nahezu gleich gehalten werden. Das bedeutet, dass der Tastgrad D der Pulsbreitenmodulation ebenfalls konstant oder nahezu konstant gehalten werden kann, so dass ein Erreichen des maximal möglichen Tastgrads D verhindert werden kann. Dies verhindert, dass der Transformator 2 in die Sättigung gerät und dadurch hohe und potentiell die Betriebsfähigkeit der Schalteinrichtungen 1a, 1b, 1c, 1d gefährdende Ströme durch die Schalteinrichtungen 1a, 1b, 1c, 1d fließen.

Mit dem Verfahren 30 zum Ansteuern eines galvanisch entkoppelten Gleichspannungswandlers, beispielsweise des Gegentaktflusswandlers 10 in Fig. 1, kann das Auftreten eines lückenden Strombetriebs des Gleichspannungswandlers 10 sowie die Sättigung des Transformators 2 während eines Ausschaltvorgangs, wenn die Versorgungsspannung Ui unter einen kritischen Wert sinkt, effektiv vermieden. Dazu ist es jedoch nicht notwendig, in der Ansteuervorrichtung eine separate Unterspannungserfassungseinrichtung oder eine separate Unterlaststromerfassungseinrichtung anzuordnen. Dies verringert die Anzahl der notwendigen Komponenten der Ansteuervorrichtung und damit die Effizienz der Ansteuervorrichtung. Gleichzeitig wird der verlässliche und sichere Betrieb des Gleichspannungswandlers durch die Anpassung der Referenzwerte für den Ausgangsstrom Jo und/oder die Ausgangsspannung Uo des Gleichspannungswandlers nicht beeinträchtigt.

## Patentansprüche

1. Ansteuervorrichtung (20) für einen galvanisch entkoppelten Gleichspannungswandler (10) mit einem Transformator (2) und einem Synchrongleichrichter (3), mit:
einer Signalerzeugungseinrichtung (22), welche dazu ausgelegt ist, Steuersignale für Schalteinrichtungen (3a, 3b) des Synchrongleichrichters (3) und ein Referenzstromsignal (22b) zu erzeugen;
einer ersten Vergleichereinrichtung (23), welche mit der Signalerzeugungseinrichtung (22) gekoppelt ist, und welche dazu ausgelegt ist, den sekundärseitigen Ausgangsstrom (Jo) des Synchrongleichrichters (3) zu erfassen, mit dem Referenzstromsignal (22b) zu vergleichen und in Abhängigkeit von dem Vergleich ein Stromsteuersignal zu erzeugen; und
einer Pulsbreitenmodulationseinrichtung (25), welche mit der Signalerzeugungseinrichtung (22) und der ersten Vergleichereinrichtung (23) gekoppelt ist, und
welche dazu ausgelegt ist, pulsbreitenmodulierte Ansteuersignale (25a) für die Schalteinrichtungen (3a, 3b) des Synchrongleichrichters (3) auf der Basis der Steuersignale und des Stromsteuersignals zu erzeugen, wobei die Pulsbreitenmodulation mit einem Tastgrad erfolgt, in dem ein Schutzzeitintervall vorgesehen ist, während dessen der magnetische Fluss in dem Transformator (2) abgebaut werden kann, und
wobei die Signalerzeugungseinrichtung (22) weiterhin dazu ausgelegt ist, das Referenzstromsignal (22b) innerhalb einer ersten vorbestimmten Zeitspanne auf einen vorbestimmten Referenzstromschwellwert zu verringern.

2. Ansteuervorrichtung (20) nach Anspruch 1, wobei die Pulsbreitenmodulationseinrichtung (25) weiterhin dazu ausgelegt ist, die pulsbreitenmodulierten Ansteuersignale (25a) derart zu erzeugen, dass der sekundärseitige Ausgangsstrom (Jo) des Synchrongleichrichters (3) durch den Wert des Referenzstromsignals (22b) begrenzt wird.

3. Ansteuervorrichtung (20) nach einem der Ansprüche 1 und 2, wobei der galvanisch entkoppelte Gleichspannungswandler (10) ein bidirektionaler Gegentaktflusswandler mit primärseitiger Vollbrückenschaltung (1) ist.

4. Ansteuervorrichtung (20) nach einem der Ansprüche 1 bis 3, wobei die Signalerzeugungseinrichtung (22) weiterhin dazu ausgelegt ist, ein Ausschaltsignal für den Gleichspannungswandler (10) zu empfangen.

5. Ansteuervorrichtung (20) nach Anspruch 4, wobei die Signalerzeugungseinrichtung (22) weiterhin dazu ausgelegt ist, das Referenzstromsignal (22b) nach dem Empfang des Ausschaltsignals auf den vorbestimmten Referenzstromschwellwert zu verringern.

6. Ansteuervorrichtung (20) nach einem der Ansprüche 4 und 5, wobei die Signalerzeugungseinrichtung (22) weiterhin dazu ausgelegt ist, ein Referenzspannungssignal (22a) zu erzeugen, und das Referenzspannungssignal (22a) innerhalb einer zweiten vorbestimmten Zeitspanne auf einen vorbestimmten Referenzspannungsschwellwert zu verringern;
wobei die Ansteuervorrichtung (20) weiterhin eine zweite Vergleichereinrichtung (24) umfasst, welche mit der Signalerzeugungseinrichtung (22) gekoppelt ist, und welche dazu ausgelegt ist, die sekundärseitige Ausgangsspannung (Uo) des Synchrongleichrichters (3) zu erfassen, mit dem Referenzspannungssignal (22a) zu vergleichen und in Abhängigkeit von dem Vergleich ein Spannungssteuersignal zu erzeugen; und
wobei die Pulsbreitenmodulationseinrichtung (25) weiterhin dazu ausgelegt ist, pulsbreitenmodulierte Ansteuersignale (25a) für die primärseitigen Schalteinrichtungen (1a, 1b, 1c, 1d) des Gleichspannungswandlers (10) auf der Basis des Spannungssteuersignals zu erzeugen.

7. Ansteuervorrichtung (20) nach Anspruch 6, wobei die Signalerzeugungseinrichtung (22) weiterhin dazu ausgelegt ist, das Referenzspannungssignal (22a) nach dem Empfang des Ausschaltsignals auf den vorbestimmten Referenzspannungsschwellwert zu verringern.

8. System (40), mit:
einem Gegentaktflusswandler (1, 2, 3), welcher einen primärseitigen Vierquadrantensteller (1), einen Transformator (2), einen Synchrongleichrichter (3) und ein LC-Filter (5, 6) umfasst; und
einer Ansteuervorrichtung (20) nach einem der Ansprüche 1 bis 7, welche dazu ausgelegt ist, pulsweitenmodulierte Ansteuersignale (25a) für Halbleiterschalter (1a, 1b, 1c, 1d; 3a, 3b) des Vierquadrantenstellers (1) und des Synchrongleichrichters (3) zu erzeugen.

9. Verfahren (40) zum Ansteuern eines galvanisch entkoppelten Gleichspannungswandlers (10) mit einem Transformator (2) und einem Synchrongleichrichter (3), mit den Schritten:
Erzeugen (31) von pulsweitenmodulierten Ansteuersignalen (25a) für Schalteinrichtungen (3a, 3b) des Synchrongleichrichters (3) in Abhängigkeit von einem Referenzstromsignal (22b), dessen Wert einen Ausgangsstrom (Jo) des Synchrongleichrichters (3) begrenzt, wobei die Pulsbreitenmodulation mit einem Tastgrad erfolgt, in dem ein Schutzzeitintervall vorgesehen ist, während dessen der magnetische Fluss in dem Transformator (2) abgebaut werden kann; und
Empfangen (32) eines Ausschaltsignals für den Gleichspannungswandler (10); und
Verringern (33) des Referenzstromsignals (22b) innerhalb einer ersten vorbestimmten Zeitspanne nach dem Empfangen des Ausschaltsignals auf einen vorbestimmten Referenzstromschwellwert.

10. Verfahren (40) nach Anspruch 9, weiterhin mit den Schritten:
Erzeugen (31) von pulsweitenmodulierten Ansteuersignalen (25a) für primärseitige Schalteinrichtungen (1a, 1b, 1c, 1d) des Gleichspannungswandlers (10) in Abhängigkeit von einem Referenzspannungssignal (22a), dessen Wert eine Ausgangsspannung (Uo) des Synchrongleichrichters (3) begrenzt; und
Verringern (34) des Referenzspannungssignals (22a) innerhalb einer zweiten vorbestimmten Zeitspanne nach dem Empfangen des Ausschaltsignals auf einen vorbestimmten Referenzspannungsschwellwert.

## Claims

1. Actuation device (20) for a DC-decoupled DC-DC converter (10) having a transformer (2) and a synchronous rectifier (3), having:
a signal-generating device (22) which is designed to generate control signals for switching devices (3a, 3b) of the synchronous rectifier (3) and a reference current signal (22b);
a first comparator device (23) which is coupled to the signal-generating device (22) and which is designed to detect the secondary-side output current (Jo) of the synchronous rectifier (3), to compare said secondary-side output current with the reference current signal (22b) and to generate a current control signal on the basis of the comparison; and
a pulse-width-modulation device (25), which is coupled to the signal-generating device (22) and to the first comparator device (23) and which is designed to generate pulse-width-modulated actuation signals (25a) for the switching devices (3a, 3b) of the synchronous rectifier (3) on the basis of the control signals and the current control signal, wherein the pulse-width modulation occurs at a duty cycle in which a safety interval is present during which the magnetic flux in the transformer (2) can be reduced, and
wherein the signal-generating device (22) is also designed to reduce the reference current signal (22b) to a predetermined reference current threshold value within a first predetermined time period.

2. Actuation device (20) according to Claim 1, wherein the pulse-width-modulation device (25) is also designed to generate the pulse-width-modulated actuation signals (25a) such that the secondary-side output current (Jo) of the synchronous rectifier (3) is limited by the value of the reference current signal (22b).

3. Actuation device (20) according to either of Claims 1 and 2, wherein the DC-decoupled DC-DC converter (10) is a bidirectional push-pull forward converter having a primary-side full-bridge circuit (1).

4. Actuation device (20) according to one of Claims 1 to 3, wherein the signal-generating device (22) is also designed to receive a switch-off signal for the DC-DC converter (10).

5. Actuation device (20) according to Claim 4, wherein the signal-generating device (22) is also designed to reduce the reference current signal (22b) to the predetermined reference current threshold value once the switch-off signal has been received.

6. Actuation device (20) according to either of Claims 4 and 5, wherein the signal-generating device (22) is also designed to generate a reference voltage signal (22a) and to reduce the reference voltage signal (22a) to a predetermined reference voltage threshold value within a second predetermined time period;
wherein the actuation device (20) also comprises a second comparator device (24) which is coupled to the signal-generating device (22) and which is designed to detect the secondary-side output voltage (Uo) of the synchronous rectifier (3), to compare said secondary-side output voltage with the reference voltage signal (22a) and to generate a voltage control signal on the basis of the comparison; and
wherein the pulse-width-modulation device (25) is also designed to generate pulse-width-modulated actuation signals (25a) for the primary-side switching devices (1a, 1b, 1c, 1d) of the DC-DC converter (10) on the basis of the voltage control signal.

7. Actuation device (20) according to Claim 6, wherein the signal-generating device (22) is also designed to reduce the reference voltage signal (22a) to the predetermined reference voltage threshold value once the switch-off signal has been received.

8. System (40), having:
a push-pull forward converter (1, 2, 3) which comprises a primary-side four-quadrant converter (1), a transformer (2), a synchronous rectifier (3) and an LC filter (5, 6); and
an actuation device (20) according to one of Claims 1 to 7, which is designed to generate pulse-width-modulated actuation signals (25a) for semiconductor switches (1a, 1b, 1c, 1d; 3a, 3b) of the four-quadrant converter (1) and the synchronous rectifier (3).

9. Method (40) for actuating a DC-decoupled DC-DC converter (10) having a transformer (2) and a synchronous rectifier (3), comprising the steps of:
generating (31) pulse-width-modulated actuation signals (25a) for switching devices (3a, 3b) of the synchronous rectifier (3) on the basis of a reference current signal (22b), the value of which limits an output current (Jo) of the synchronous rectifier (3), wherein the pulse-width modulation occurs at a duty cycle in which a safety interval is present during which the magnetic flux in the transformer (2) can be reduced; and
receiving (32) a switch-off signal for the DC-DC converter (10); and,
once the switch-off signal has been received, reducing (33) the reference current signal (22b) to a predetermined reference current threshold value within a first predetermined time period.

10. Method (40) according to Claim 9, also comprising the steps of:
generating (31) pulse-width-modulated actuation signals (25a) for primary-side switching devices (1a, 1b, 1c, 1d) of the DC-DC converter (10) on the basis of a reference voltage signal (22a), the value of which limits an output voltage (Uo) of the synchronous rectifier (3); and,
once the switch-off signal has been received, reducing (34) the reference voltage signal (22a) to a predetermined reference voltage threshold value within a second predetermined time period.

## Revendications

1. Arrangement d'attaque (20) pour un convertisseur de tension continue (10) découplé galvaniquement comprenant un transformateur (2) et un redresseur synchrone (3), comprenant :
un dispositif générateur de signaux (22) qui est conçu pour générer des signaux de commande pour des dispositifs de commutation (3a, 3b) du redresseur synchrone (3) et un signal de courant de référence (22b) ;
un premier dispositif comparateur (23) qui est connecté au dispositif générateur de signaux (22) et qui est conçu pour détecter le courant de sortie côté secondaire (Jo) du redresseur synchrone (3), le comparer au signal de courant de référence (22b) et générer un signal de commande de courant en fonction de la comparaison ; et
un dispositif de modulation d'impulsions en largeur (25) qui est connecté au dispositif générateur de signaux (22) et au premier dispositif comparateur (23) et qui est conçu pour générer des signaux d'attaque (25a) modulés en largeur d'impulsion pour les dispositifs de commutation (3a, 3b) du redresseur synchrone (3) sur la base des signaux de commande et du signal de commande de courant, la modulation d'impulsions en largeur étant effectuée avec un rapport cyclique dans lequel se trouve un intervalle de temps de protection pendant lequel le flux magnétique dans le transformateur (2) peut être évanoui et
le dispositif générateur de signaux (22) étant en outre conçu pour réduire le signal de courant de référence (22b) à une valeur de seuil de courant de référence prédéterminée à l'intérieur d'un premier intervalle de temps prédéterminé.

2. Arrangement d'attaque (20) selon la revendication 1, le dispositif de modulation d'impulsions en largeur (25) étant en outre conçu pour générer les signaux d'attaque (25a) modulés en largeur d'impulsion de telle sorte que le courant de sortie côté secondaire (Jo) du redresseur synchrone (3) est limité par la valeur du signal de courant de référence (22b).

3. Arrangement d'attaque (20) selon l'une des revendications 1 et 2, le convertisseur de tension continue (10) découplé galvaniquement étant un convertisseur de flux symétrique bidirectionnel avec circuit en pont intégral (1) côté primaire.

4. Arrangement d'attaque (20) selon l'une des revendications 1 à 3, le dispositif générateur de signaux (22) étant en outre conçu pour recevoir un signal de mise hors circuit pour le convertisseur de tension continue (10) .

5. Arrangement d'attaque (20) selon la revendication 4, le dispositif générateur de signaux (22) étant en outre conçu pour réduire le signal de courant de référence (22b) à une valeur de seuil de courant de référence prédéterminée après la réception du signal de mise hors circuit.

6. Arrangement d'attaque (20) selon l'une des revendications 4 et 5, le dispositif générateur de signaux (22) étant en outre conçu pour générer un signal de tension de référence (22a) et réduire le signal de tension de référence (22a) à la valeur de seuil de tension de référence prédéterminée au sein d'un deuxième intervalle de temps prédéterminé ;
l'arrangement d'attaque (20) comportant en outre un deuxième dispositif comparateur (24) qui est connecté au dispositif générateur de signaux (22) et qui est conçu pour détecter la tension de sortie côté secondaire (Uo) du redresseur synchrone (3), la comparer au signal de tension de référence (22a) et générer un signal de commande de tension en fonction de la comparaison ; et le dispositif de modulation d'impulsions en largeur (25) étant en outre conçu pour générer des signaux d'attaque (25a) modulés en largeur d'impulsion pour les dispositifs de commutation côté primaire (1a, 1b, 1c, 1d) du convertisseur de tension continue (10) sur la base du signal de commande de tension.

7. Arrangement d'attaque (20) selon la revendication 6, le dispositif générateur de signaux (22) étant en outre conçu pour réduire le signal de tension de référence (22a) à une valeur de seuil de tension de référence prédéterminée après la réception du signal de mise hors circuit.

8. Système (40) comprenant :
un convertisseur de flux symétrique (1, 2, 3) qui comporte, du côté primaire, un pont en H (1), un transformateur (2), un redresseur synchrone (3) et un filtre L-C (5, 6) ; et
un arrangement d'attaque (20) selon l'une des revendications 1 à 7, lequel est conçu pour générer des signaux d'attaque (25a) modulés en largeur d'impulsion pour des commutateurs à semiconducteur (1a, 1b, 1c, 1d ; 3a, 3b) du pont en H (1) et du redresseur synchrone (3).

9. Procédé (40) pour exciter un convertisseur de tension continue (10) découplé galvaniquement comprenant un transformateur (2) et un redresseur synchrone (3), comprenant les étapes suivantes :
génération (31) de signaux d'attaque (25a) modulés en largeur d'impulsion pour des dispositifs de commutation (3a, 3b) du redresseur synchrone (3) en fonction d'un signal de courant de référence (22b) dont la valeur limite un courant de sortie (Jo) du redresseur synchrone (3), la modulation d'impulsions en largeur étant effectuée avec un rapport cyclique dans lequel se trouve un intervalle de temps de protection pendant lequel le flux magnétique dans le transformateur (2) peut être évanoui ; et
réception (32) d'un signal de mise hors circuit pour le convertisseur de tension continue (10) ; et
réduction (33) du signal de courant de référence (22b) à une valeur de seuil de courant de référence prédéterminée à l'intérieur d'un premier intervalle de temps prédéterminé après la réception du signal de mise hors circuit.

10. Procédé (40) selon la revendication 9, comprenant en outre les étapes suivantes :
génération (31) de signaux d'attaque (25a) modulés en largeur d'impulsion pour des dispositifs de commutation côté primaire (1a, 1b, le, 1d) du convertisseur de tension continue (10) en fonction d'un signal de tension de référence (22a) dont la valeur limite une tension de sortie (Uo) du redresseur synchrone (3) ; et
réduction (34) du signal de tension de référence (22a) au sein d'un deuxième intervalle de temps prédéterminé à une valeur de seuil de tension de référence prédéterminée après la réception du signal de mise hors circuit.
